# EUROPÄISCHE PATENTANMELDUNG

(11) **EP 4 019 432 A1**
(43) Veröffentlichungstag der Anmeldung: **29.06.2022**
(21) Anmeldenummer: 21209796.8
(22) Anmeldetag: 23.11.2021
(51) Int. Cl.: B65G 1/127, B65G 17/12, B65G 17/18, B65G 17/16

(54) **EINRICHTUNG ZUR BEFESTIGUNG EINES WARENAUFNAHMEMITTELS**

(30) Priorität: 04.12.2020 DE 102020132243
(71) Anmelder: PLS Fulda GmbH & Co. KG, 36341 Lauterbach (DE)
(72) Erfinder: Heinle, Alexander, 36341 Lauterbach (DE)
(74) Vertreter: Warneke, Nicola

(57) **Zusammenfassung**

Die Erfindung betrifft eine Einrichtung zur Befestigung eines Warenaufnahmemittels (3-5; 3a), insbesondere eines Warenaufnahmebehälters, an einem Umlaufförderer (1; 1a), die mindestens ein mit dem Warenaufnahmemittel (3-5; 3a) und einem umlaufenden Fördermittel (2; 2a) verbundenes, verschwenkbares Befestigungselement (8; 8a) sowie zwei Befestigungsarme (9, 10; 9a, 10a) aufweist. Zweckmäßigerweise sind die beiden Befestigungsarme (9, 10; 9a, 10a) an dem Fördermittel (2; 2a) abgewandten Enden (18; 18a) gelenkig miteinander verbunden und an das verschwenkbare Befestigungselement (8; 8a) angelenkt. Es wird ein Umlaufförderer geschaffen, der besonders kompakt ausgebildet ist und zur Verwendung unterschiedlich tiefer Warenaufnahmebehälter geeignet ist.

## Beschreibung

### GEBIET DER ERFINDUNG

Die Erfindung betrifft eine Einrichtung zur Befestigung eines Warenaufnahmemittels, insbesondere eines Warenaufnahmebehälters, an einem Umlaufförderer, die mindestens ein mit dem Warenaufnahmemittel und einem umlaufenden Fördermittel verbundenes, verschwenkbares Befestigungselement sowie zwei Befestigungsarme aufweist.

### TECHNISCHER HINTERGRUND

Aus dem Stand der Technik sind Umlaufförderer sowie Paternosterschränke bekannt, die Warenaufnahmemittel, die beispielsweise als Warenaufnahmebehälter oder im Fall von aufgerollten strangförmigen Waren als Warenaufnahmestangen oder -rohre ausgebildet sind, aufweisen, und die bauartbedingt alle gleich groß und derart an dem Umlaufförderer angebracht sind, dass zwischen horizontal benachbarten Warenaufnahmemitteln ein nicht nutzbarer Raum entsteht.

Weitere Befestigungseinrichtungen sowie Umlaufförderer sind aus DE 2 205 010 A1, DE 43 11 695 C2 sowie DE 85 14 624 U1 bekannt.

### ZUSAMMENFASSUNG DER ERFINDUNG

Der Erfindung liegt die Aufgabe zugrunde, eine Befestigungseinrichtung der eingangs genannter Art zu schaffen, durch die eine große Anzahl an Warenaufnahmemitteln wie Behälter oder Stangen an einen Umlaufförderer angebracht werden kann.

Erfindungsgemäß wird die Aufgabe dadurch gelöst, dass die beiden Befestigungsarme an dem Fördermittel abgewandten Enden gelenkig miteinander verbunden und an das verschwenkbare Befestigungselement angelenkt sind.

Durch die gelenkige Verbindung wird sichergestellt, dass an einem oberen sowie einem unteren Wendepunkt eines Umlaufförderers ein horizontaler und vertikaler Abstand des vorzugsweise Warenaufnahmebehälter umfassenden Warenaufnahmemittels zu dem Fördermittel sowie benachbarten Warenaufnahmemitteln derart groß ist, dass eine Kollision sicher verhindert wird.

Ferner liegt der Erfindung die Aufgabe zugrunde, einen Umlaufförderer zu schaffen, der besonders kompakt ausgebildet ist und zur Verwendung unterschiedlich tiefer Warenaufnahmebehälter geeignet ist.

Erfindungsgemäß wird die Aufgabe dadurch gelöst, dass ein Raum zwischen horizontal benachbarten Warenaufnahmemitteln nahezu vollständig mit insbesondere unterschiedlich großen Warenaufnahmemitteln ausgefüllt ist.

Vorteilhaft werden keine nicht nutzbaren Leerräume gebildet.

Zweckmäßigerweise ist ein Gelenk, welches die beiden Befestigungsarme an dem Fördermittel abgewandten Enden gelenkig miteinander und mit dem verschwenkbaren Befestigungselement verbindet, entlang des Befestigungselements geführt bewegbar. Ein Gelenkabschnitt kann das vorzugsweise stabförmige, insbesondere zylindrische Befestigungselement zumindest teilweise umschließen. Vorteilhaft bildet das Befestigungselement das Führungsmittel.

Weiter vorteilhaft ist eine Bewegung der Befestigungsarme entlang des vorzugsweise stabförmigen Befestigungselementes möglich, so dass insbesondere an dem oberen sowie unteren Wendepunkt des Umlaufförderers ein ausreichend großer Abstand zu dem Fördermittel sowie benachbarten Warenaufnahmemitteln besteht. Dadurch ist beispielsweise die Verwendung unterschiedlich großer, insbesondere tiefer Warenaufnahmebehälter möglich.

In einer Ausgestaltung der Erfindung sind an benachbarten Warenaufnahmemitteln angebrachte Befestigungsarme gelenkig miteinander und mit dem Fördermittel verbunden.

Eine gelenkige Verbindung bewirkt an dem oberen sowie dem unteren Wendepunkt eines Umlaufförderers ein Verschwenken der Befestigungsarme, wodurch ein Gelenk, welches die beiden Befestigungsarme an dem Fördermittel abgewandten Enden gelenkig miteinander und mit dem Befestigungselement verbindet, entlang des Befestigungselements geführt bewegt wird. Durch diese Bewegung kann ein ausreichend großer Abstand von Warenaufnahmebehältern zu benachbarten Behältern sowie dem Fördermittel sichergestellt werden.

In einer weiteren Ausgestaltung der Erfindung sind die beiden Befestigungsarme mit dem Fördermittel zugewandten Enden an das Fördermittel, das vorzugsweise als Laschenkette oder als Hohlbolzenkette ausgebildet ist, angelenkt. Eine Laschenkette hat sich als vorteilhaft erwiesen, wenn kleine Biegeradien im Bereich einer Umlenkrolle des Umlaufförderers erforderlich sind.

Zweckmäßigerweise ist die gelenkige Verbindung in der Art eines Drehgelenks ausgebildet. Vorteilhaft wird eine gelenkige Verbindung mit einem einzigen Freiheitsgrad geschaffen, das heißt einer Verschwenkung verbundener Bauteile. Bewegungen in andere, für den Betrieb unerwünschte Richtungen werden vorteilhaft blockiert.

In einer Ausgestaltung der Erfindung sind die beiden Befestigungsarme identisch ausgebildet. Vorteilhaft ist ein einfacher Austausch beschädigter Befestigungsarme möglich. Eine erneute Einstellung nach einem Austausch ist nicht erforderlich.

Vorzugsweise sind die Befestigungsarme aus Stahl gebildet. Obwohl nicht unbedingt erforderlich, ist eine gekrümmte Form vorteilhaft, wobei ein Krümmungsradius größer sein muss als ein Radius von Umlenkrollen eines Umlaufförderers, an dem ein Warenaufnahmebehälter mit einer erfindungsgemäße Befestigungseinrichtung angebracht ist.

Zweckmäßigerweise bilden die beiden Befestigungsarme und ein zwischen den beiden Befestigungsarmen angeordneter Fördermittelabschnitt in einer Förderposition ein gleichschenkliges Dreieck. Eine Förderposition ist eine Position, in der das vorzugsweise einen Warenaufnahmebehälter umfassende Warenaufnahmemittel mit einer ausschließlich vertikalen Richtungskomponente bewegt wird.

In einer weiteren Ausgestaltung der Erfindung weisen die Befestigungsarme vorzugsweise konkave Aussparungen auf, die zur Aufnahme einer an einem Gelenkzapfen angebrachten Rolle beim Überschreiten eines oberen oder unteren Wendepunktes des Umlaufförderers eingerichtet sind. Die Rolle ist vorzugsweise an einen Gelenkzapfens eines Drehgelenks angebracht, durch das das Befestigungselement verschwenkbar mit dem Fördermittel verbunden ist, rastet beim Überschreiten des oberen oder unteren Wendepunktes in die Aussparung ein und wird mitgedreht bis der Warenaufnahmebehälter eine Förderposition erreicht hat.

In einer Ausgestaltung der Erfindung sind die Befestigungsarme als Mitnehmer ausgebildet, die den Warenaufnahmebehälter beim Überschreiten eines oberen oder unteren Wendepunktes des Umlaufförderers mitnehmen. Vorteilhaft wird ein unkontrolliertes Absacken des Warenaufnahmemittels am oberen Wendepunkt verhindert. Am unteren Wendepunkt kann eine geführte Bewegung des Warenaufnahmemittels erfolgen. Vorteilhaft kann beispielsweise ein Zusammenstoß benachbarter Warenaufnahmebehälter verhindert werden.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
Fig. 1 eine Schnittsicht einer Einrichtung gemäß einer Ausführungsform der Erfindung;
Fig. 2 eine Detailansicht einer Einrichtung gemäß einer Ausführungsform der Erfindung.

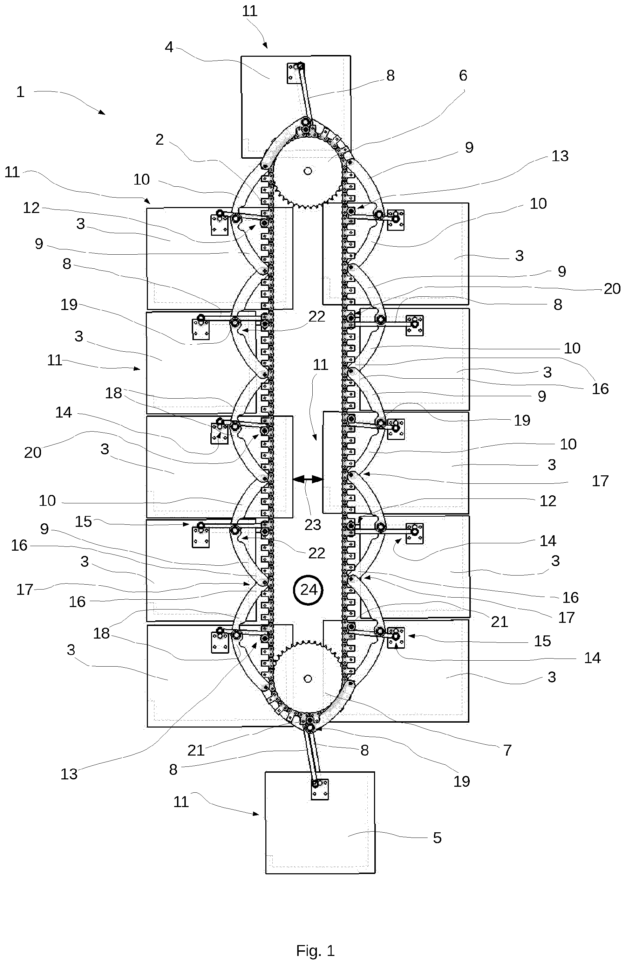

Ein in Fig. 1 in einer Seitenansicht gezeigter Umlaufförderer 1 weist eine Laschenkette 2 auf, die zur umlaufenden Bewegung von unterschiedlich großen Warenaufnahmebehältern 3, 4, 5 eingerichtet ist, und über eine obere 6 sowie eine untere Umlenkrolle 7 geführt ist.

Jeder Warenaufnahmebehälter 3-5 ist auf jeder Seite durch ein zylinderförmiges Befestigungselement 8 sowie zwei Tragarme 9, 10 mit der Laschenkette 2 verbunden.

Das verschwenkbare Befestigungselement 8 ist in einem oberen Bereich einer Warenentnahmeöffnung 11 an einem ersten Ende 12 gelenkig in der Art eines Drehgelenks 13 mit der Laschenkette 2 und an einem zweiten Ende 14 gelenkig in der Art eines Drehgelenks 15 mit dem Warenaufnahmebehälter 3-5 verbunden.

Die Warenaufnahmebehälter 3 sind in diesem Ausführungsbeispiel in einer Förderposition.

Während der Laschenkette 2 zugewandte Enden 16 benachbarter Tragarme 9, 10 jeweils durch ein Drehgelenk 17 mit der Laschenkette 2 sowie miteinander verbunden sind, sind der Laschenkette 2 abgewandte Enden 18 der Tragarme 9, 10 durch ein Drehgelenk 19, welches entlang einer Längsachse des Befestigungselements 8 geführt bewegbar ist, mit dem Befestigungselement 8 verbunden. Das Befestigungselement 8 bildet außerdem ein Führungsmittel für die geführte Bewegung.

Beim Überschreiten eines oberen Wendepunktes werden die Tragarme eines Warenaufnahmebehälters 4 derart aufeinander zu bewegt, dass eine drehbare Rolle 20 eines Gelenkzapfen 21 des Drehgelenks 13 in eine konkave Einkerbung 22 der Tragarme 9, 10 eingreift. Dadurch sackt der Warenaufnahmebehälter 4 nach Überschreiten des oberen Wendepunktes nicht nach unten ab, sondern wird kontinuierlich mitgenommen. Ein hinreichend großer Abstand zu benachbarten Warenaufnahmebehältern 3 wird sichergestellt.

Beim Überschreiten eines unteren Wendepunktes im Bereich der unteren Umlenkrolle 7 wird der Warenaufnahmebehälter 5 ebenfalls mitgenommen, indem die Rolle 20 erneut in die konkave Aussparung 22 eingreift.

Es wird ein Umlaufförderer 1 geschaffen, der mit besonders tiefen Warenaufnahmebehältern 3-5 betrieben werden kann, das heißt ein horizontaler Abstand 23 benachbarter Warenaufnahmebehälter 3 kann besonders klein sein. Ein Raum 24 kann nahezu vollständig ausgefüllt werden, das heißt jeder der Warenaufnahmebehälter 3 kann sich maximal bis zu einer in Fig. 1 nicht gezeigten Linie erstrecken, die die Drehpunkte der oberen 6 sowie der unteren Umlenkrolle 7 miteinander verbindet.

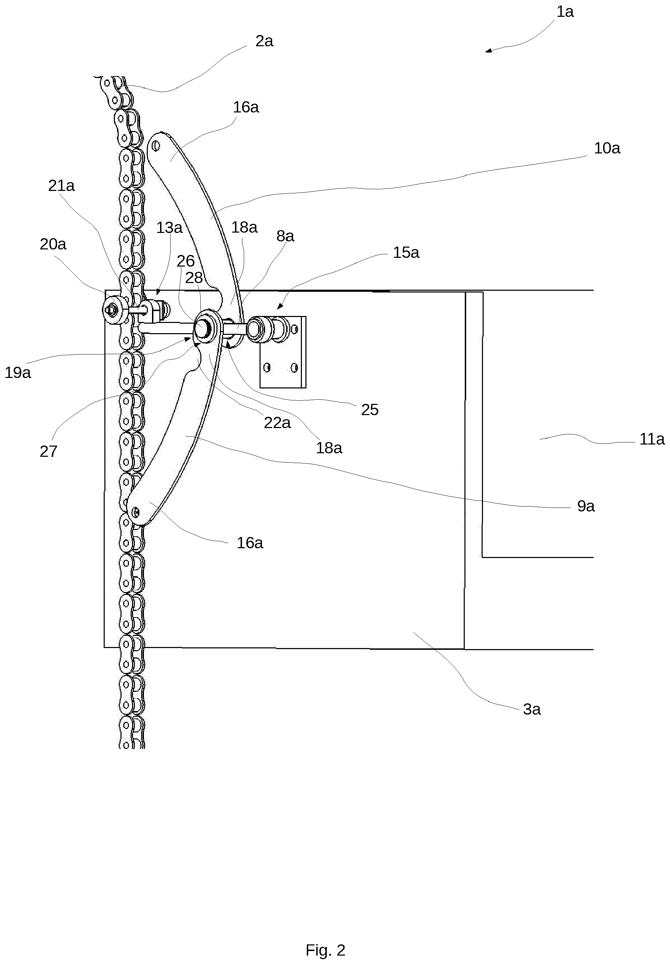

Es wird nun auf Fig. 2 Bezug genommen, wo gleiche oder gleichwirkende Teile mit derselben Bezugszahl wie in Fig. 1 bezeichnet sind und der betreffenden Bezugszahl jeweils der Buchstabe a beigefügt ist.

Bei einer in Fig. 2 ausschnittsweise schematisch in einer isometrischen Ansicht im Detail gezeigten Einrichtung ist zur gelenkigen Verbindung von einer Laschenkette 2a abgewandten Enden 18a von Tragarmen 9a, 10a mit einem Befestigungselement 8a ein das Befestigungselement in Umfangsrichtung umschließender Lochbolzen 25 vorgesehen, der dazu eingerichtet ist, mit Bolzenabschnitten 26 durch Öffnungen 27 an den Enden 18a der Tragarme 9a, 10a hindurchzuragen und dadurch ein entlang des Befestigungselementes 8a geführt bewegbares Drehgelenk 19a auszubilden. Zur Fixierung der Bolzenabschnitte 26 ist ein Sicherungsring 28 vorgesehen.

Enden 16a benachbarter Tragarme 9a, 10a sind durch einen in Fig. 2 nicht gezeigten Gelenkzapfen eines in Fig. 2 aus Gründen der Übersichtlichkeit nicht gezeigten Drehgelenks miteinander verbunden.

## Patentansprüche

1. Einrichtung zur Befestigung eines Warenaufnahmemittels (3-5; 3a), insbesondere eines Warenaufnahmebehälters, an einem Umlaufförderer (1; 1a), die mindestens ein mit dem Warenaufnahmemittel (3-5; 3a) und einem umlaufenden Fördermittel (2; 2a) verbundenes, verschwenkbares Befestigungselement (8; 8a) sowie zwei Befestigungsarme (9, 10; 9a, 10a) aufweist,
**dadurch gekennzeichnet,**
**dass** die beiden Befestigungsarme (9, 10; 9a, 10a) an dem Fördermittel (2; 2a) abgewandten Enden (18; 18a) gelenkig miteinander verbunden und an das verschwenkbare Befestigungselement (8; 8a) angelenkt sind.

2. Vorrichtung nach Anspruch 1,
**dadurch gekennzeichnet,**
**dass** ein Gelenk (19; 19a), welches die beiden Befestigungsarme (9, 10; 9a, 10a) an dem Fördermittel (2; 2a) abgewandten Enden (18; 18a) gelenkig miteinander und mit dem verschwenkbaren Befestigungselement (8; 8a) verbindet, entlang des Befestigungselements (8; 8a) geführt bewegbar ist.

3. Vorrichtung nach Anspruch 1 oder 2,
**dadurch gekennzeichnet,**
**dass** an benachbarten Warenaufnahmemitteln (3-5; 3a) angebrachte Befestigungsarme (9, 10; 9a, 10a) gelenkig miteinander und mit dem Fördermittel (2; 2a) verbunden sind.

4. Vorrichtung nach einem der Ansprüche 1 bis 3,
**dadurch gekennzeichnet,**
**dass** die beiden Befestigungsarme (9, 10; 9a, 10a) mit dem Fördermittel zugewandten Enden (16; 16a) an das Fördermittel, das vorzugsweise als Laschenkette (2; 2a) oder Hohlbolzenkette ausgebildet ist, angelenkt sind.

5. Vorrichtung nach einem der Ansprüche 1 bis 4,
**dadurch gekennzeichnet,**
**dass** die gelenkige Verbindung in der Art eines Drehgelenks (13, 15, 17, 19; 13a, 15a, 17a, 19a) ausgebildet ist.

6. Vorrichtung nach einem der Ansprüche 1 bis 5,
**dadurch gekennzeichnet,**
**dass** die beiden Befestigungsarme (9, 10; 9a, 10a) identisch ausgebildet sind.

7. Vorrichtung nach einem der Ansprüche 1 bis 6,
**dadurch gekennzeichnet,**
**dass** die beiden Befestigungsarme (9, 10; 9a, 10a) und ein zwischen den beiden Befestigungsarmen angeordneter Fördermittelabschnitt in einer Förderposition ein gleichschenkliges Dreieck bilden.

8. Vorrichtung nach einem der Ansprüche 1 bis 7,
**dadurch gekennzeichnet,**
**dass** die Befestigungsarme (9, 10; 9a, 10a) vorzugsweise konkave Aussparungen (22) aufweisen, die zur Aufnahme einer an einem Gelenkzapfen (21) angebrachten Rolle (20) beim Überschreiten eines oberen oder unteren Wendepunktes des Umlaufförderers (1; 1a) eingerichtet sind.

9. Vorrichtung nach einem der Ansprüche 1 bis 8, **dadurch gekennzeichnet,**
**dass** die Befestigungsarme (9, 10; 9a, 10a) als Mitnehmer ausgebildet sind, die das Warenaufnahmemittel (3-5; 3a) beim Überschreiten eines oberen oder unteren Wendepunktes des Umlaufförderers (1; 1a) mitnehmen.

10. Umlaufförderer, insbesondere Kettenumlaufförderer (1; 1a) oder Paternoster, der eine Einrichtung zur Befestigung eines Warenaufnahmemittelss (3-5; 3a) nach einem der Ansprüche 1 bis 9 aufweist, wobei insbesondere ein Raum (24) zwischen horizontal benachbarten Warenaufnahmemitteln nahezu vollständig mit insbesondere unterschiedlich großen Warenaufnahmemitteln, insbesondere Warenaufnahmebehältern (3), ausgefüllt ist.
